Europäisches Patentamt

European Patent Office

Office européen des brevets

(19)

(11) Numéro de publication: **0 455 553 B1**

(12) **FASCICULE DE BREVET EUROPEEN**

(45) Date de publication de fascicule du brevet: **18.01.95**

(51) Int. Cl.6: **C03C 25/02**, C08L 95/00, D04H 1/48, C10C 3/00

(21) Numéro de dépôt: **91401140.8**

(22) Date de dépôt: **30.04.91**

(54) **Mélange à base de bitume pour le revêtement des surfaces.**

(30) Priorité: **04.05.90 FR 9005653**

(43) Date de publication de la demande:
**06.11.91 Bulletin 91/45**

(45) Mention de la délivrance du brevet:
**18.01.95 Bulletin 95/03**

(84) Etats contractants désignés:
**AT BE CH DE DK ES FR GB GR IT LI LU NL SE**

(56) Documents cités:
**US-A- 3 885 068**
**US-A- 3 993 496**

(73) Titulaire: **ISOVER SAINT-GOBAIN**
**Les Miroirs**
**18, avenue d'Alsace**
**F-92400 Courbevoie (FR)**

(72) Inventeur: **Basin, Gérard**
**2, rue du Verger**
**F-60600 Clermont (FR)**
Inventeur: **Le Breton, Patrick**
**Les Aulnais-Bat. E**
**76 rue Jules Michelet**
**F-60140 Liancourt (FR)**

(74) Mandataire: **Breton, Jean-Claude et al**
**SAINT-GOBAIN RECHERCHE**
**39, quai Lucien Lefranc**
**F-93304 Aubervilliers (FR)**

EP 0 455 553 B1

**Description**

L'invention concerne les techniques de revêtements des surfaces avec des mélanges à base de bitume, spécialement pour les revêtements routiers et en particulier les mélanges pour l'enrobage des graviers.

Les bitumes utilisés pour revêtir des surfaces en vue de les rendre étanches comme dans le cas des terrasses ou pour permettre le roulement des véhicules, sur les routes, en particulier dans ce dernier cas, lorsqu'il s'agit de constituer à la surface de la route une couche perméable à l'eau grâce à la technique des enrobés drainants, ne sont pratiquement jamais employés à l'état pur. En effet, leurs performances à basse et haute températures sont insuffisantes, seuls ils fourniraient des revêtements fragiles et cassants par temps de gel et qui, au contraire deviendraient mous à la chaleur. Pour améliorer le comportement des bitumes et surtout avec les enrobés et élargir ainsi la gamme des températures où ils sont utilisables, on ajoute des substances diverses au bitume, des plus banales comme des poudres de calcaire broyé, aux plus sophistiqués comme des macromolécules à base de styrène-butadiène-styrène. Il a entre autres été proposé depuis longtemps d'ajouter des quantités variables de matériaux fibreux, amiante, fibres de roche ou fibres de verre. Ces additifs élargissent la gamme de températures où les mélanges bitumineux peuvent être utilisés. Cependant l'utilisation de tels mélanges pour la réalisation d'enrobés drainants pour lesquels on cherche à limiter l'écrasement sous charge à haute température reste insuffisant, seules les utilisations sous charge faible et/ou à température moyenne sont possibles. Sous forte charge ou par grande chaleur, le bitume flue et les interstices entre les graviers s'obstruent, le drainage ne s'effectue ensuite plus normalement au travers du revêtement de la chaussée.

L'invention se donne pour tâche de permettre la production d'un mélange bitumineux permettant l'enrobage des graviers et autorisant leur utilisation comme revêtement auto-drainant en toutes circonstances.

Un autre but poursuivi par l'invention est, plus généralement, d'élargir vers le haut la gamme des températures d'utilisation du mélange ou, autrement dit, d'améliorer son comportement mécanique à température élevée.

L'incorporation de fibres minérales dans le bitume est connue depuis longtemps. C'est ainsi que le brevet suédois SE 211 163 proposait d'utiliser comme charge dans le bitume des fibres minérales d'un diamètre moyen compris entre 5 et 10 $\mu$m avec des longueurs entre 0,1 et 5 mm. Plus récemment, les brevets européens EP 55 233 et EP 58 290 proposent d'utiliser au contraire des fibres d'un diamètre moyen de 1 à 5 $\mu$m en les traitant à l'aide d'un agent mouillant cationique dans des conditions de mélange particulières.

L'invention propose un mélange bitumineux comportant de la laine minérale dans une proportion pondérale comprise entre 0,5 et 20 % par rapport au bitume et un micronaire avant tout traitement chimique ou mécanique qui soit au plus égal à 7 pour 5 grammes, les fibres ayant subi un traitement avec un apprêt non ionique. Celui-ci comprend avantageusement un oxyde d'amine et de préférence d'amine de méthylalkyl, l'alkyl étant avantageusement à base d'un radical d'acide gras tel que dans l'oxyde d'amine diméthyl stéaryl. Les fibres ont également selon l'invention, au moment de leur introduction dans le bitume, une longueur inférieure à 500$\mu$m.

L'invention couvre également un procédé pour la fabrication d'un mélange à base de bitume avec de la laine minérale comportant les étapes : fabrication de la laine minérale, traitement des fibres vierges avec l'apprêt décrit ci-dessus, séchage des fibres, création de nodules par passage dans une plaque à trous de dimension moyenne comprise entre 3 et 30 mm et enfin mélange des fibres minérales et du bitume.

Dans une variante du procédé, la dimension moyenne des trous de la plaque est comprise entre 6 et 15 mm et est de préférence de 10 mm dans le cas d'un micronaire de 6 pour 5 grammes ou de 8 mm dans le cas d'un micronaire de 4 pour 5 grammes.

L'invention prévoit également l'application du procédé à la fabrication d'un mélange comportant des graviers pour réaliser des revêtements de chaussée, compacts ou autodrainants. Il est également prévu de l'appliquer à la fabrication de mélanges destinés au revêtement étanche de toitures ou de parois verticales telles que les barrages.

La technique de l'invention permet entre autres de réaliser des mélanges bitumineux parfaitement adaptés à la technique des enrobés drainants. En particulier la tenue en température est nettement meilleure, c'est ainsi que le test dit de "la bille et de l'anneau" est amélioré d'une valeur qui peut atteindre 18° C. De même l'essai de coulage à la jauge DANIEL est amélioré de 40 %.

L'invention permet ainsi d'améliorer sensiblement les performances des mélanges bitumineux contenant une proportion donnée de fibres ou, si les conditions d'emploi l'autorisent, elle permet de garder les performances atteintes avec les fibres habituelles, mais avec une proportion de fibres beaucoup moins

2

importante, par exemple 3 % au lieu de 5 %, ce qui entraîne une économie importante.

Les figures et la description qui suivent permettront de comprendre le fonctionnement de l'invention et d'en saisir tous les avantages.

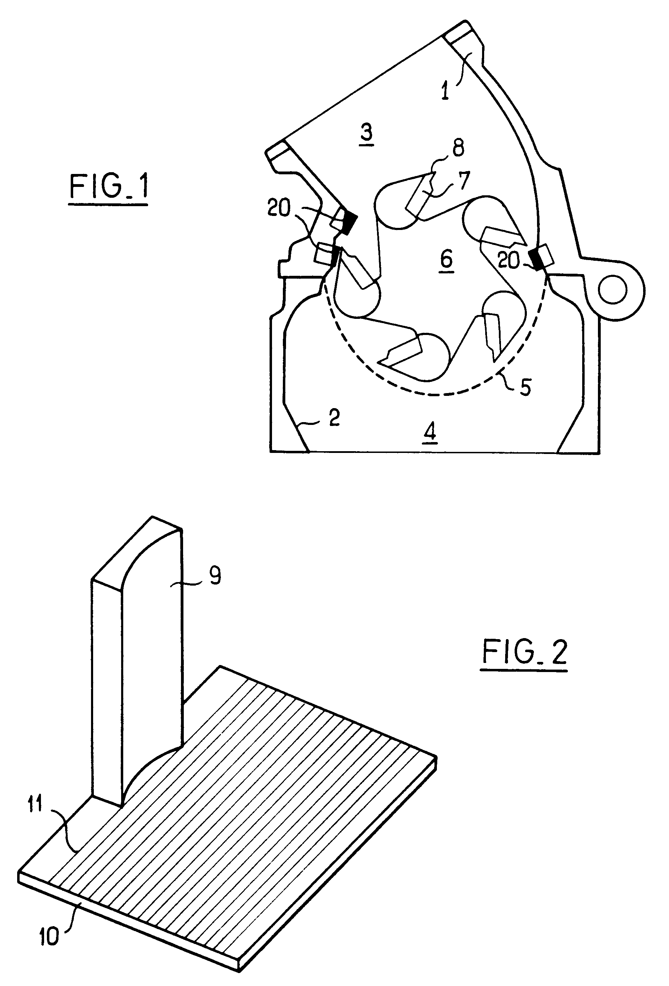

. **figure 1** : c'est une vue schématique de la machine qui permet de préparer des nodules fibreux,

. **figure 2** : on présente la jauge DANIEL,

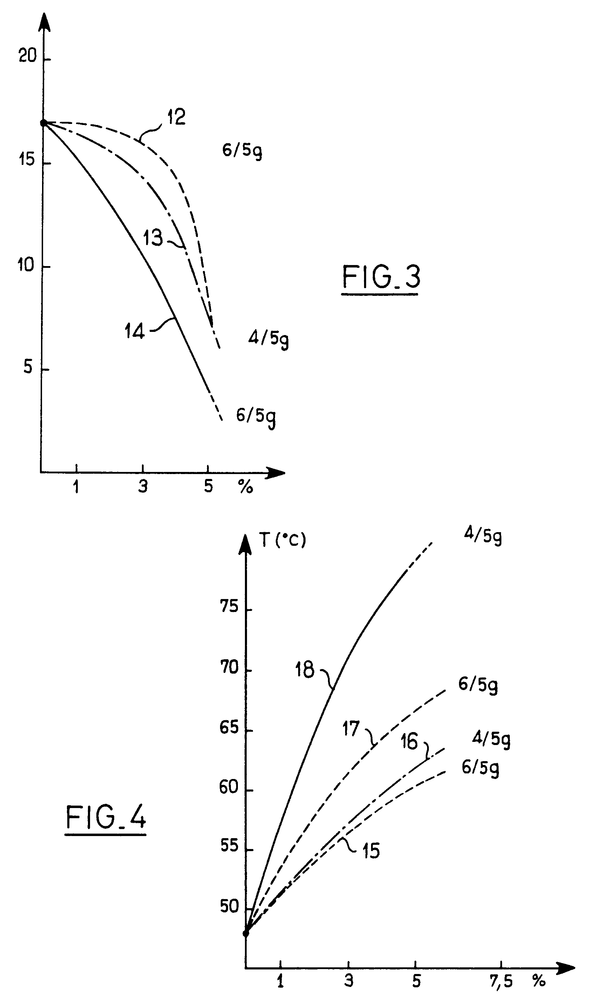

. **figure 3** : elle montre les résultats comparatifs des essais à la jauge DANIEL,

. **figure 4** : on y montre les résultats de l'essai "bille + anneau".

Lors de la production de fibres destinées à être ajoutées au bitume, on passe par les étapes successives suivantes : fabrication de fibres de diamètre et de longueur voulus à partir d'un matériau en fusion tel qu'un laitier de haut fourneau ou une composition verrière, ensimage éventuel des fibres à l'aide d'un composé organique en solution, séchage et polymérisation éventuels, traitement du matelas fibreux pour l'adapter à la fonction d'adjuvant du bitume et enfin conditionnement.

La composition chimique des fibres minérales, de même que leur procédé de fabrication ne jouent en eux-mêmes pas de rôle déterminant dans leur adaptation à la fonction d'adjuvant du bitume. Ainsi, par exemple, le procédé décrit dans le brevet EP 59 512 pour la fabrication de fibres de roche, aussi bien que celui du brevet EP 91 866 pour la production de fibres de verre permettent d'atteindre le résultat recherché. Les seuls paramètres qui se sont montrés importants sont la finesse et la longueur des fibres produites.

Les spécialistes de la production des fibres minérales connaissent bien les difficultés qu'il y a à caractériser par ces grandeurs, diamètres et longueurs une production industrielle. Il est évidemment possible d'effectuer des prélèvements sur le matelas en production et d'observer au microscope les fibres recueillies. On peut noter le diamètre et la longueur de chacune des fibres observées dans le champ optique, et l'on peut calculer des moyennes arithmétiques. On atteindra ainsi un diamètre moyen et une longueur moyenne. Si l'on fait de nombreuses mesures de ce type et si l'on admet que le prélèvement n'est pas destructif (pour la longueur en particulier), on peut obtenir des chiffres représentatifs du matelas fibreux. Mais ces deux grandeurs, diamètres et longueurs ne sont pas indépendantes : les fibres les plus étirées seront les plus minces, longueur et diamètre paraissent donc a priori être des paramètres variant dans des sens opposés mais, d'un autre côté, les fibres les plus minces sont également les plus fragiles, elles cassent dès les premières phases de fabrication et risquent de devenir plus courtes que les plus grosses fibres. Il se trouve qu'un paramètre important pour le renfort d'un bitume, est la surface spécifique des éléments de fibres introduits dans le bitume. Le diamètre n'est pas à même de rendre compte de cette surface spécifique et donc, pas à même de définir correctement la capacité d'un lot donné de fibres à servir de renfort au bitume.

Au cours des essais pour mettre au point des bitumes renforcés performants, il s'est avéré qu'une grandeur pouvait servir pour juger de la capacité d'un matelas de fibres à remplir le rôle de renfort du bitume : le micronaire.

La mesure du micronaire appelée aussi "indice de finesse" rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est normalisée (DIN 53941 ou ASTM D 1448) et elle utilise un appareil dit "appareil micronaire". Les essais de l'invention ont été menés avec une machine SHEFFIELD, type FAM 60 P. Cette machine comporte une arrivée d'air (ou d'azote) sous pression, une vanne de réglage de cette pression, un débitmètre, une chambre cylindrique à axe vertical avec arrivée des gaz en partie inférieure. Les fibres pesées, (le plus souvent, 5 grammes ± 0,01 g) sont pressées au fond de la chambre par un bouchon calibré qui laisse échapper les gaz. Un essai préliminaire permet d'ajuster le débit d'air à une valeur donnée, toujours la même avant de commencer l'essai du tampon de fibres. La mesure du micronaire ou de l'indice de finesse, consiste à relever l'indication du débitmètre normalisé, lorsque la fibre est en place. Pour travailler dans la même gamme de pertes de charge, il est nécessaire d'adapter la quantité de fibres testées en diminuant la masse lorsque le diamètre diminue. Il est donc nécessaire de mentionner celle-ci en même temps que le résultat du débit. Les essais de l'invention ont montré qu'une condition nécessaire à l'obtention d'un bitume performant était un micronaire inférieur à 7 pour 5 grammes.

Cette grandeur, le micronaire, permet de contrôler dans quelle mesure un lot donné de fibres convient ou non au renforcement du bitume.

Lors de la fabrication des fibres de roche ou des fibres de verre, il est habituel de projeter sur les fibres un liquide qui permet de les revêtir d'une matière appelée ensimage et qui, selon sa nature, permet d'adapter les fibres à l'usage auquel on les destine.

En ce qui concerne le renfort des bitumes, dans l'art antérieur, ou bien il est prévu de ne rien mettre sur les fibres minérales comme ensimage (SE 211 163) ou bien d'ajouter un agent mouillant cationique (EP

3

55 233 ou EP 58 290).

Certaines autres techniques prévoyaient d'utiliser pour enrober des graviers, avec ou sans adjonction de fibres minérales, des bitumes auxquels ont été ajoutés des adjuvants destinés à favoriser l'accrochage du bitume sur les autres éléments du mélange final. Ces adjuvants sont ou bien eux aussi des agents mouillants cationiques (DE-AS-17 19 350) ou des amines (US-4 166 752 ou FR-2 181 882). Tous ces ensimages ou ces adjuvants sont donc des composés ioniques.

Dans le cadre de l'invention, en revanche on projette sur les fibres de roche ou sur les fibres de verre destinées à renforcer le bitume, juste après leur élaboration, une solution aqueuse d'un agent mouillant non ionique. D'excellents résultats ont été obtenus avec des solutions d'oxydes d'amines tertiaires tels que les oxydes d'alkyl méthylamine et en particulier dans le cas où l'alkyl est un radical d'acide gras.

Après l'obtention du matelas de fibres au bon micronaire, avec l'ensimage adapté, il reste à rendre la présentation des fibres compatible avec les conditions de mise en oeuvre du bitume. Cette mise en condition comporte la fabrication de nodules et leur ensachage.

La fabrication de nodules se fait en deux phases : dans la première phase, les matelas de fibres sont transformés en flocons qui sont eux-mêmes, dans une deuxième phase, transformés en nodules.

Pour fabriquer les flocons, on utilise une déchiqueteuse comportant essentiellement deux cylindres parallèles tournant en sens inverse et comportant des doigts qui, entre les cylindres, s'entrecroisent sans se toucher. A la sortie de la déchiqueteuse, un transporteur pneumatique reprend les flocons pour les apporter à un deuxième appareil qui est représenté figure 1. Il s'agit d'une "noduleuse". Elle comporte une buse d'entrée 1 et une buse de sortie 2. L'espace amont 3 est séparé de l'espace aval 4 par une paroi 5 en tôle métallique percée de trous. Cette tôle à la forme d'un cylindre qui est coaxial avec un tambour rotatif 6 portant des couteaux 7 dont le tranchant 8 est légèrement incliné par rapport à l'axe commun. Vis à vis des couteaux mobiles 7, on trouve des couteaux fixes 20 dont la distance par rapport aux couteaux mobiles est réglable. Une distance de l'ordre de quelques millimètres, 2 mm en particulier, s'est avérée convenir. Les trous ont un diamètre compris entre 3 et 30 mm, de préférence de 6 mm à 15 mm en fonction de l'origine des fibres et de leur micronaire. A la sortie de la noduleuse, la buse 2 est reliée à un deuxième circuit de transport pneumatique par une vanne à écluse qui permet le passage des nodules sans perturber les circuits d'air. La dernière opération faite sur le lieu de production des fibres minérales est le conditionnement des nodules qui se fait soit en vrac dans des conteneurs, soit dans des sacs faits d'un film en plastique. Dans ce cas, le polypropylène est choisi de préférence.

La réalisation d'un produit d'enrobage de graviers selon l'invention se fait de la manière suivante, présentée à titre d'exemple. Dans un mélangeur à axe vertical comme on les utilise pour mélanger le bitume, on introduit d'abord 1600 kg d'un mélange de graviers calibrés et de filler (poudre). Avant introduction, ces graviers ont été préchauffés à 160°C. Immédiatement après les graviers, on introduit les nodules fibreux selon l'invention (8 kg) dans le mélangeur sans les sortir du sac en polypropylène. Le bitume liquide du type 60/70 (82kg), à une température également de 160°C est alors introduit à son tour. Après mélange pendant 2 minutes, la préparation est prête à revêtir la chaussée. En déposant 4 cm sur un substrat imperméable, on obtient une couche d'enrobés drainants dont la porosité est d'environ 20 % et qui a une bien meilleure tenue à la chaleur que les enrobés habituels.

Pour tester les qualités d'un mélange de bitume destiné à l'enrobage des graviers, plusieurs méthodes sont utilisées. La figure 2 représente schématiquement la "jauge DANIEL". Cet appareil comprend deux éléments perpendiculaires l'un à l'autre, une goulotte 9 et une plaque 10. L'essai DANIEL se fait en deux temps, dans un premier temps, la goulotte 9 est horizontale et la plaque 10 verticale. On remplit la goulotte du mélange chaud à tester, on nivelle la surface supérieure et on laisse le mélange se stabiliser à 40°C pendant 16 heures. Après ce délai, on bascule la goulotte verticalement et on observe comment le mélange se répand sur la plaque horizontale. Celle-ci est gravée avec des rayures 11 parallèles et équidistants de 3,175 mm. Au bout de 4 heures dans une ambiance à 40°C, on relève la position sur la plaque de la lisière du bitume la plus éloignée du pied de la goulotte. Le nombre d'intervalles qui sépare cette lisière du pied constitue le résultat du test à la jauge DANIEL. Plus le chiffre est élevé et moins le comportement en température du produit est satisfaisant.

Un autre test couramment utilisé est le test de la bille et de l'anneau. Ce test est normalisé (NF-T 66008, DIN 195 U4 ou ASTM D 36-76). Le principe est très simple : une bille d'acier d'une masse déterminée est placée sur une prise d'essai du produit, contenue dans un anneau de métal de dimensions normalisées. L'ensemble est chauffé avec une croissance de la température constante de 5°C par minute. La température à laquelle la prise devient assez molle, pour que la bille ayant pénétrée le produit bitumineux tombe enveloppée de celui-ci d'une hauteur déterminée, est prise comme le point de ramollissement du produit étudié.

4

Le résultat du test est ainsi donné sous forme d'une température, plus celle-ci est grande, meilleur est le comportement du produit à la chaleur. Il faut cependant remarquer que les valeurs supérieures à 75°C ne sont fournies qu'à titre indicatif, leur position relative devenant incertaine dans cette zone.

Les résultats de l'essai à la jauge DANIEL sont présentés figure 3. On voit en abscisse le pourcentage pondéral des fibres qui constituent le seul adjuvant introduit dans le bitume et en ordonnées, les étendues de l'écoulement obtenu sur la plaque. La tendance générale est que plus la quantité d'une fibre d'un type donné est importante dans le mélange, moins celui-ci est coulant. Parmi les trois courbes 12, 13 et 14, les courbes 12 et 13 correspondent à une fibre avec un micronaire qui était respectivement de 6 et de 4, tous deux pour 5 grammes, cette fibre ayant été ensimée avec une amine quaternaire en solution aqueuse (la Lubromine NP).

La courbe 14 correspond en revanche à une fibre qui a le même micronaire avant ensimage que celle de la courbe 12, mais dont le revêtement résulte du traitement à l'aide d'une solution aqueuse d'oxyde de stéaryl de diméthylamine. On constate que l'amélioration apportée par le traitement avec cet agent tensio-actif non ionique dépend de la quantité de fibres. Elle permet d'obtenir une amélioration de plusieurs dizaines de pourcents.

La figure 4 quant à elle, présente les résultats du test bille + anneau. On voit en abscisse, comme précédemment le pourcentage pondéral des charges de fibres minérales dans le bitume pur. En ordonnée figure la température du mélange pour laquelle la bille traverse le bitume. Les courbes 15 et 17 correspondent à un micronaire de 6 pour 5 grammes et les courbes 16 et 18 à une valeur de 4, toujours pour 5 grammes. Toutes ces courbes rassemblent pour chaque pourcentage, des valeurs qui sont les moyennes arithmétiques de plusieurs résultats expérimentaux. Les améliorations sont ici encore plus spectaculaires puisqu'à une concentration de 5%, elles atteignent 6°C pour le micronaire 6 et 17°C pour le micronaire 4. Comme dans le cas de l'essai DANIEL, on voit ici aussi que le traitement réalisé sur la fibre permet à un micronaire de 6 d'être plus performant qu'un micronaire de 4.

Les essais précédents étaient réalisés avec une noduleuse équipée d'une grille à trous de 6 mm de diamètre. D'autres essais ont été réalisés à micronaire constant (4 pour 5 grammes) avec un ensimage à base d'oxyde de stéaryl diméthylamine en faisant varier les diamètres des trous circulaires de la grille. On les a varié de 2 à 10 mm. Dans chaque cas on commençait par mélanger 5 % de fibres dans un bécher avec 2 litres de bitume 50-70 à 150°C en utilisant une turbine Raineri. L'opération est poursuivie pendant 5 minutes. Au bout de ce temps, on observe à l'oeil l'homogénéïté du mélange, dans la majorité des cas il est apparu comme satisfaisant. C'est seulement pour le diamètre 10 mm qu'il a fallu recommencer l'agitation pendant une deuxième période de 5 minutes avant d'obtenir un mélange d'aspect homogène. Lorsque le mélange est terminé, on procède à l'essai de mesure de température bille-anneau. Parallèlement on a observé au microscope électronique à balayage les mêmes nodules de différents diamètres que ceux qui ont servi à faire les mélanges testés en TBA. On a alors mesuré la longueur de toutes les fibres visibles dans le champ et on a d'une part calculé la moyenne de ces longueurs et d'autre part, on a calculé la proportion des fibres qui ont une longueur inférieure à 0,5 mm. Les résultats figurent dans le tableau :

| nodules (O trous) mm | fibres | | TBA (°C) |
|---|---|---|---|
| | long. µm | % 0-0,5 mm | |
| 2 | – | – | 57 |
| 4 | 105 | 96 | 61 |
| 6 | 255 | 85 | 65 |
| 8 | 330 | 78 | 78 |
| 10 | 490 | 65 | 81 |

Des contrôles sur le bitume mélangé dans les conditions précédentes ont montré que la longueur des fibres est très peu modifiée par l'opération de mélange "doux" pratiquée ici.

Il ressort de l'essai précédent que la méthode de préparation des nodules proposée par l'invention permet de maîtriser la longueur des fibres et de la sauvegarder jusqu'au moment de leur introduction dans le bitume. Il a par ailleurs permis de mettre en évidence l'influence de cette même longueur sur le comportement du mélange en température, la limite dans le choix des grandes longueurs (des gros nodules) étant due aux difficultés de mélange.

Dans les exemples qui suivent, on présente des essais effectués avec des micronaires (ou des diamètres de fibres pondérés) différents, avec des ensimages - ioniques ou non ioniques - variés dans des quantités égalaient différentes ainsi qu'avec des nodules modifiés et des proportions de fibres variées.

## - EXEMPLE 1 :

La fibre était une fibre de verre centrifugée avec un micronaire de 4 pour 5 grammes. La solution d'ensimage était composée de Lubromine NP dissoute dans une quantité égale d'eau. Les quantités pulvérisées étaient telles que la quantité d'ensimage était de 0,42 % en poids par rapport à la fibre. Le séchage s'est effectué pendant le transfert des fibres jusqu'au tapis transporteur.

Le matelas de fibres ainsi formé a été alors tronçonné et transporté jusqu'à la déchiqueteuse en aval de laquelle se trouvait la noduleuse équipée d'une grille à trous d'un diamètre de 8 mm. Les nodules ont alors été recueillis à la sortie puis mélangés au bitume dans la proportion de 5 % en poids.

On a procédé ensuite à l'essai "bille et anneau" pour lequel on a trouvé une température de 69,0° C.

## - EXEMPLE 2 :

Les conditions étaient les mêmes que pour l'exemple 1, mais à la différence près que l'ensimage était constitué d'un oxyde de stéaryl diméthylamine. Ce produit était dilué à 50 % dans l'eau et a permis d'obtenir un ensimage à 0,48 % du poids de fibres. Introduites à 5 % dans un bitume 60/70, les fibres préparées en nodules comme dans l'exemple 1 permettent d'atteindre une température de 75,3 ° C au test bille et anneau.

## - EXEMPLE 3 :

Dans cet exemple, les conditions sont exactement les mêmes, y compris la nature de l'ensimage, que dans l'exemple 1. La différence est dans la concentration de la Lubromine NP qui est ici de 1 part pour 2,30 parts d'eau en volume entraînant un pourcentage d'ensimage de 0,17 % ce qui conduit à une température bille et anneau de 66,8° C.

## - EXEMPLE 4 :

Cet essai est également effectué avec les mêmes fibres, le même micronaire, la même technique de "nodulage" (même diamètre des trous de la grille) que précédemment. L'ensimage est comme dans l'exemple 2 de l'oxyde de stéaryl diméthylamine dilué dans l'eau dans la proportion d'un volume pour 1,4 volumes d'eau. L'ensimage obtenu est alors de 0,28 % en poids. Il permet d'atteindre une température bille + anneau de 78,8° C.

## - EXEMPLES 5 et 6 :

Les exemples 5 et 6 utilisent une fibre de verre centrifugée plus épaisse, avec un micronaire de 6 pour 5 grammes. Dans l'exemple 5, l'ensimage est de la Lubromine NP avec une concentration dans l'eau du liquide d'origine de 30 % en volume et l'ensimage obtenu est de 0,25 % par rapport au poids de fibres. On atteint ainsi une température bille-anneau de 59,6° C. Dans l'exemple 6 en revanche l'ensimage est à base du même oxyde d'amine que précédemment, il est dilué de manière identique ce qui fournit une proportion d'ensimage de 0,20 %. Le résultat a été ici de 63,0° C.

## - EXEMPLE 7 :

L'exemple 7 utilise la même fibre, préparée de la même manière que l'exemple 6, sauf en ce qui concerne la préparation des nodules. Ici, ils ont été fabriqués avec une plaque de tôle à trous (5, figure 1) dont le diamètre était de 10 mm. Le résultat obtenu est meilleur qu'avec la plaque à trous de 6 mm puisqu'il est de 66,5° C.

**- EXEMPLE 8 :**

Il est identique à l'exemple 7 sauf pour la nature et la concentration de l'ensimage. On a utilisé ici également un oxyde d'amine grasse, mais le radical d'acide gras était celui de l'acide laurylique. On en a donc réalisé une solution à 30 % dans l'eau pour obtenir un ensimage à 0,17 % pondéraux, ce qui a fourni un résultat du même ordre que le précédent : 66,1° C.

**- EXEMPLE 9 :**

Les exemples 9 et 10 utilisent une fibre fine avec un micronaire de 4 pour 5 grammes, les nodules sont faits avec une plaque de tôle à trous de 8 mm, mais la quantité de fibres introduites dans le bitume est ici de 7,5 % en poids. Dans l'exemple 9, l'ensimage était de l'oxyde de stéaryl diméthylamine dilué à 30 % dans l'eau pour fournir un ensimage à 0,15 % du poids de fibres. Dans ces conditions, le résultat atteint était de 77,1° C pour le test de la bille et de l'anneau.

**- EXEMPLE 10 :**

Les conditions de préparation sont toutes identiques à celles de l'exemple 9, sauf l'ensimage où le radical stéaryl est remplacé par le lauryl, il est dilué à 30 % dans l'eau ce qui fournit une quantité d'ensimage de 0,14 % et conduit à une température bille et anneau de 80,3° C.

Les exemples précédents montrent donc que la technique de l'invention en présentant une méthode de préparation des fibres minérales destinées à renforcer un mélange de graviers dans le bitume est différente des techniques antérieures, aussi bien par la qualité des fibres de départ (finesse et longueur) que par la nature des ensimages et par l'utilisation de nodules qui, préparés dans des conditions bien définies permettent de réaliser des enrobés dont les propriétés sont nettement améliorées par rapport à celles des autres techniques, ces nodules, ainsi préparés, permettent de maîtriser la longueur des fibres et de la sauvegarder jusqu'au moment de leur introduction dans le bitume. L'ensemble de ces caractéristiques permet, soit de garder les mêmes performances en diminuant les quantités de fibres à ajouter dans le mélange, soit d'améliorer sensiblement les performances pour un coût identique.

**Revendications**

1. Mélange bitumineux comportant de la laine minérale dans une proportion pondérale comprise entre 0,5 et 20 % par rapport au bitume, **caractérisé en ce que** le micronaire des fibres (déterminé selon les normes DIN 53941 ou ASTM D 1448) est avant tout traitement chimique ou mécanique, au plus égal à 7 pour 5 grammes, **et en ce qu'**elles ont subi un traitement avec un apprêt non ionique.

2. Mélange selon la revendication 1, **caractérisé en ce que** l'apprêt comprend un oxyde d'amine.

3. Mélange selon la revendication 2, **caractérisé en ce que** l'apprêt est à base d'oxyde d'alkyl méthylamine.

4. Mélange selon la revendication 3, **caractérisé en ce que** l'alkyl est à base de radical d'acide gras.

5. Mélange selon la revendication 4, **caractérisé en ce que** l'apprêt comporte un oxyde d'amine diméthyl stéaryl.

6. Mélange selon l'une des revendications précédentes, **caractérisé en ce que** la longueur des fibres minérales est, après traitement mécanique, inférieure à 100 $\mu$m.

7. Procédé de fabrication d'un mélange bitumineux comportant de la laine minérale, **caractérisé par** les étapes suivantes :
   . fabrication de laine minérale à un micronaire au plus égal à 7 pour 5 grammes,
   . traitement des fibres vierges avec un apprêt non-ionique, séchage,

. formation de nodules par passage dans une plaque à trous de 3 à 30 mm de dimension moyenne,

. mélange de la laine minérale et du bitume.

**8.** Procédé selon la revendication 7, **caractérisé en ce que** les trous de la plaque formant les nodules ont une dimension moyenne de 6 mm à 15 mm.

**9.** Procédé selon la revendication 8, **caractérisé en ce que** le micronaire des fibres avant traitement est de 6 pour 5 grammes **et que** les trous de la plaque formant les nodules sont sensiblement circulaires avec un diamètre de 10 mm.

**10.** Procédé selon la revendication 8, **caractérisé en ce que** le micronaire des fibres avant traitement est de 4 pour 5 grammes **et que** les trous de la plaque formant les nodules sont sensiblement circulaires avec un diamètre de 8 mm.

**11.** Procédé selon l'une des revendications 7 à 10, **caractérisé en ce que** l'apprêt non-ionique est à base d'oxyde d'amine.

**12.** Procédé selon la revendication 11, **caractérisé en ce que** l'apprêt comprend de l'oxyde d'amine diméthylalkyl.

**13.** Application du procédé selon l'une des revendications 7 à 12 à la fabrication d'un mélange à base de graviers pour réaliser une chaussée à enrobés drainants.

**14.** Application du procédé selon l'une des revendication 7 à 12 à la fabrication d'un mélange à base de graviers pour réaliser la couche superficielle compacte d'une chaussée.

**15.** Application du procédé selon l'une des revendications 7 à 12 à la fabrication d'un mélange pour l'étanchéïfication des toitures et des parois verticales telles que les barrages.

**Claims**

**1.** A bituminous mixture comprising mineral wool in a proportion by weight comprised between 0.5 and 20% in relation to the bitumen, characterised in that the micronaire of the fibres determined according to DIN 53941 or ASTM D1448 standards is, prior to any chemical or mechanical treatment, equal to at most 7 per 5 grams; and in that they have undergone treatment with a non-ionic finish.

**2.** A mixture according to Claim 1, characterised in that the finish comprises an amine oxide.

**3.** A mixture according to Claim 2, characterised in that the finish has a methyl amine alkyl oxide base.

**4.** A mixture according to Claim 3, characterised in that the alkyl has a fatty acid radical base.

**5.** A mixture according to Claim 4, characterised in that the finish comprises a dimethyl amine stearyl oxide.

**6.** A mixture according to any one of the preceding claims, characterised in that the length of the mineral fibres after mechanical treatment is less than 100 $\mu$m.

**7.** A method of producing a bituminous mixture comprising mineral wool, characterised by the following stages:
. production of mineral wool with a micronaire at most equal to 7 per 5 grams;
. treatment of the virgin fibres with a non-ionic finish and drying;
. formation of nodules by passage through a plate with holes from 3 to 30 mm average size;
. mixing of the mineral wool and bitumen.

**8.** A method according to Claim 7, characterised in that the holes in the plate forming the nodules have an average size of 6 mm to 15 mm.

9. A method according to Claim 8, characterized in that the micronaire of the fibres prior to treatment is 6 per 5 grams; and in that the holes in the plate forming the nodules are substantially circular and 10 mm in diameter.

10. A method according to Claim 8, characterised in that the micronaire of the fibres prior to treatment is 4 per 5 grams; and in that the holes in the plate forming the nodules are substantially circular and 6 mm in diameter.

11. A method according to any one of Claims 7 to 10, characterised in that the non-ionic finish has an amine oxide base.

12. A method according to Claim 11, characterised in that the finish contains dimethyl amine alkyl oxide.

13. Application of the method according to any one of Claims 7 to 12 to the manufacture of a gravel-based mixture for producing a road surface containing draining coatings.

14. Application of the method according to any one of Claims 7 to 12 to the manufacture of a gravel-based mixture for producing the compact surface layer of a roadway.

15. Application of the method according to any one of Claims 7 to 12 to the manufacture of a mixture for waterproofing roof coverings and vertical walls such as dams.

**Patentansprüche**

1. Asphaltmischung, welche Mineralwolle in einem Gewichtsanteil von zwischen 0,5 und 20% im Verhältnis zum Asphalt aufweist, dadurch gekennzeichnet, daß dar (gemäß den Normen DIN 53941 oder ASTM D 1448 bestimmte) Micronaire der Fasern vor jeglicher chemischer oder mechanischer Behandlung höchstens gleich 7/5 g ist, und daß diese eine Behandlung mit einent nicht-ionischen Appreturmittel erfahren haben.

2. Mischung nach Anspruch 1, dadurch gekennzeichnet, daß das Appreturmittel ein Aminoxid aufweist.

3. Mischung nach Anspruch 2, dadurch gekennzeichnet, daß das Appreturmittel auf der Basis von Alkylmethylaminoxid ist.

4. Mischung nach Anspruch 3, dadurch gekennzeichnet, daß das Alkyl auf der Basis eines Fettsäureradikals ist.

5. Mischung nach Anspruch 4, dadurch gekennzeichnet, daß das Appreturmittel ein Dimethylstearylaminoxid aufweist.

6. Mischung nach einem der vorhergehenden Ansprüche, dadurch gekennzeichnet, daß die Länge der Mineralfasern nach mechanischer Behandlung weniger als 100 $\mu$m beträgt.

7. Verfahren zur Herstellung einer Asphaltmischung, die Mineralwolle aufweist, gekennzeichnet durch die folgenden Schritte:
   - Herstellung von Mineralwolle mit einem Micronaire von höchstens gleich 7/5 g,
   - Behandlung der Rohfasern mit einem nicht-ionischen Appreturmittel, Trocknen,
   - Bildung von Knäueln beim Durchgang durch eine Platte mit Löchern einer durchschnittlichen Größe von 3 bis 30 mm,
   - Mischen der Mineralwolle und des Asphalts.

8. Verfahren nach Anspruch 7, dadurch gekennzeichnet, daß die Löcher in der Platte für die Knäuelbildung eine durchschnittliche Größe von 6 bis 15 mm besitzen.

9. Verfahren nach Anspruch 8, dadurch gekennzeichnet, daß der Micronaire der Fasern vor der Behandlung 6/5 g beträgt, und daß die Löcher in der Platte für die Knäuelbildung in etwa kreisförmig mit einem Durchmesser von 10 mm sind.

**10.** Verfahren nach Anspruch 8, dadurch gekennzeichnet, daß der Micronaire der Fasern vor der Behandlung 4/5 g beträgt, und daß die Löcher in der Platte für die Knäuelbildung in etwa kreisförmig mit einem Durchmesser von 8 mm sind.

**11.** Verfahren nach einem der Ansprüche 7 bis 10, dadurch gekennzeichnet, daß das nicht-ionische Appreturmittel auf der Basis von Aminoxid ist.

**12.** Verfahren nach Anspruch 11, dadurch gekennzeichnet, daß das Appreturmittel Dimethylalkylaminoxid aufweist.

**13.** Anwendung des Verfahrens nach einem der Ansprüche 7 bis 12 zur Herstellung einer Mischung auf der Basis von Kies zur Herstellung einer Straße mit flüssigkeitsabführenden Fahrbelägen.

**14.** Anwendung des Verfahrens nach einem der Ansprüche 7 bis 12 zur Herstellung einer Mischung auf der Basis von Kies zur Herstellung der kompakten Oberflächenschicht einer Straße.

**15.** Anwendung des Verfahrens nach einem der Ansprüche 7 bis 12 zur Herstellung einer Mischung zur Abdichtung von Bedachungen und vertikalen Wänden wie Staumauern.

FIG. 1

FIG. 2

11

FIG.3

FIG.4